# EUROPEAN PATENT SPECIFICATION

(11) **EP 2 174 050 B1**
(45) Date of publication and mention of the grant of the patent: **21.11.2012**
(21) Application number: 08796385.6
(22) Date of filing: 21.07.2008
(51) Int. Cl.: F16K 47/08

(54) **VALVE WITH CAGE**
VENTIL MIT GEHÄUSE
APPAREIL POUR AUGMENTER UN ECOULEMENT DE FLUIDE DANS UNE SOUPAPE

(30) Priority: 25.07.2007 US 881324
(43) Date of publication of application: 14.04.2010
(60) Divisional application: 12166430.4
(73) Proprietor: Fisher Controls International LLC, St. Louis, MO 63136 (US)
(72) Inventor: PERRAULT, Aaron, Andrew, Chanhassen, MN 55317 (US); VAITH, Joseph, Michael, Lesterville, SD 57040 (US); WESTWATER, David, J., Albion, IA 50005 (US)
(74) Representative: Bohnenberger, Johannes
(86) International application number: PCT/US2008/070659
(87) International publication number: WO 2009/015094

(56) References cited:
- DE-A1- 3 515 925
- GB-A- 2 199 674
- JP-A- 2 150 585
- JP-A- 54 050 710
- JP-A- 62 137 484
- US-A- 3 514 074
- US-A- 4 149 563
- US-A- 4 705 071
- US-A- 5 018 703
- US-A- 5 964 248
- US-A1- 2002 162 591
- US-A1- 2003 188 787

## Description

### FIELD OF THE DISCLOSURE

This disclosure relates generally to apparatus to increase fluid flow in a valve and, more particularly to apparatus to increase the fluid flow in a fluid passageway through a valve cage of a fluid control valve.

### BACKGROUND

Processing plants use control valves in a wide variety of applications such as, for example, controlling product flow in a food processing plant, maintaining fluid levels in large tank farms, etc. Automated control valves are used to manage the product flow or to maintain the fluid levels by functioning like a variable passage. The amount of fluid flowing through a valve body of the control valve can be accurately controlled by precise movement of a valve control member (e.g., a plug). The fluid flow capacity of the control valve can be increased by enlarging the size of the control valve. However, this typically increases the cost of the control valve.

DE 3515925 discloses an apparatus acccording to the preamble of claim 1.

### SUMMARY

An apparatus to increase fluid flow in a valve according to the invention is defined in the appended claims.

### BRIEF DESCRIPTION OF THE DRAWINGS

FIG. 1 is a partially cut-away schematic illustration of a known valve assembly.

FIG. 2 is an enlarged illustration of the valve cage of the known valve assembly of FIG. 1.

FIG. 3 is partially cut-away schematic illustration of an example valve assembly, not forming part of the claimed invention.

FIG. 4 is partially cut-away schematic illustration of an example valve assembly, not forming part of the claimed invention.

FIG. 5 is an enlarged illustration of a portion of another example valve assembly not forming part of the claimed invention.

FIG. 6 is an enlarged illustration of a portion of example valve assembly, according to the claimed invention.

### DETAILED DESCRIPTION

In general, the example apparatus to increase fluid flow in a valve described herein may be utilized for fluid flow in various types of assemblies or devices. Additionally, while the examples disclosed herein are described in connection with the control of product flow for the processing industry, the examples described herein may be more generally applicable to a variety of control operations for different purposes.

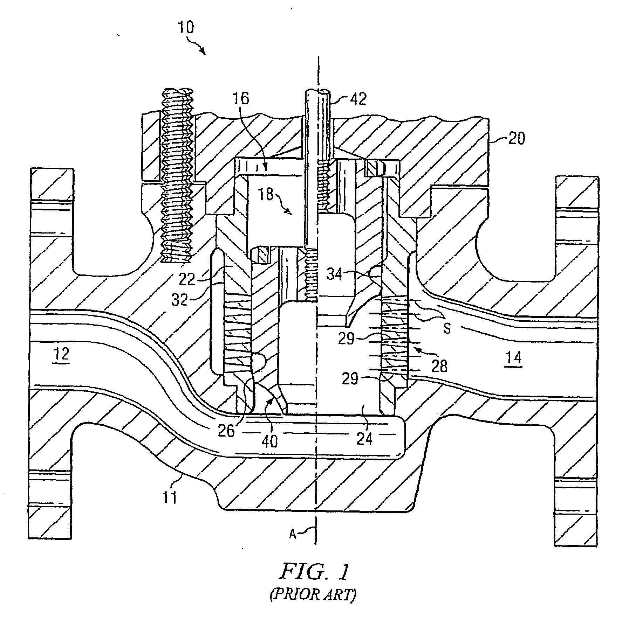

FIG. 1 is a partially cut-away schematic illustration of a known control valve assembly 10. The control valve assembly 10 includes a valve body 11 having an inlet port 12 and an outlet port 14, a valve cage 16, a valve plug assembly 18 and a bonnet assembly 20. In other control valve assemblies, the inlet and the outlet may be reversed whereby fluid flows in an opposite direction. The valve cage 16 has a cylindrical wall 22 defining a bore 24 located along an axis A. The valve cage 16 defines a valve seat 26 having one or more fluid flow zones 28, which enable fluid flow between an exterior wall surface 32 and an interior wall surface 34 of the cylindrical wall 22. The valve plug assembly 18 includes a generally cylindrical-shaped valve plug 40 slidably disposed within the bore 24 and attached to a stem 42. As shown clearly in FIG. 1, fluid flow through the valve body 11 is determined by the position of the valve plug assembly 18 in the valve cage 16. For purposes of illustrations, the left half of the valve plug assembly 18 is depicted in a closed fluid flow position and the right half of the valve plug assembly 18 is depicted in an open fluid flow position.

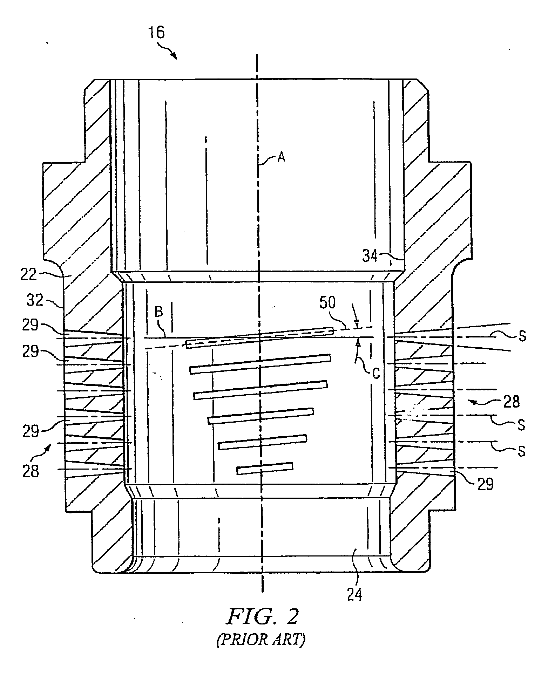

Referring to FIGS 1 and 2, each fluid flow zone 28 includes a plurality of spaced-apart slots 29 extending between the exterior wall surface 32 and the interior wall surface 34 of the valve cage 16. Each slot 29 is generally rectangular in shape and has a longitudinal axis 50 extending circumferentially relative to the valve cage 16 and oriented at an angle C relative to a reference plane B extending orthogonally relative to the axis A. Each slot 29 also has an opening or slot axis S extending radially relative to the axis A. The slots 29 extend straight through the cylindrical wall 22 of the valve cage 16 such that each slot axis S lies either in or parallel to the reference plane B.

The slots 29 present fluid flow passages requiring abrupt changes of direction of the fluid flowing from the inlet 12 to the outlet 14 via the slots 29 (see FIG. 1). The fluid must change direction as it flows through the slots 29 to the outlet port 14. The change of direction of fluid flow results from the fluid being directed by the slots 29 straight through the wall 22 from the interior wall surface 34 to the exterior wall surface 36. In other words, the fluid flow through each slot 29 is in a direction lying either in or parallel to the reference plane B. Typically, a change in the direction of fluid flow is accompanied losses of fluid flow velocity, fluid pressure, and the volume of fluid flow. An increase in the fluid flow capacity of the control valve assembly 10 can be accomplished by enlarging the size of the control valve assembly 10. However, this increases the cost of the control valve assembly 10.

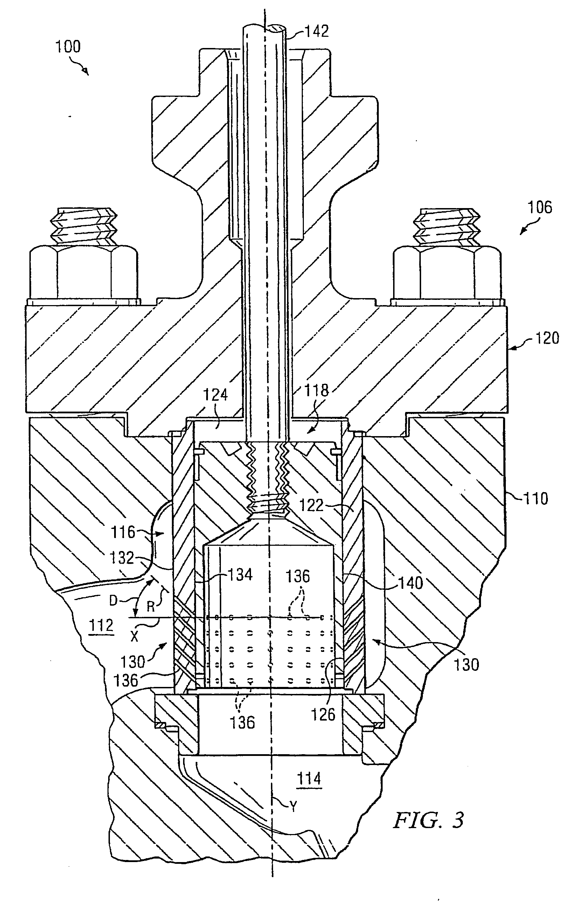

Example apparatus to increase the fluid flow in a valve are illustrated in FIGS. 3-6. Structural elements which are similar to elements in FIGS. 1 and 2 are indicated in FIGS. 3-6 by reference numerals increased by 100, 200, 300 or 400, respectively.

FIG. 3 is a partially cut-away schematic illustration of an example control valve assembly 100. The example control valve assembly 100 includes a valve body 106 having an inlet port 112 and an outlet port 114, a valve cage 116, a valve plug assembly 118 and a bonnet assembly 120. The valve cage 116 is a sleeve-like structure having a cylindrical wall 122 defining a bore 124 located along an axis Y. The valve cage 116 defines a valve seat 126 having one or more fluid flow zones 130, which enable fluid flow between an outer surface 132 and an inner surface 134 of the cylindrical wall 122. The valve plug assembly 118 includes a generally cylindrical-shaped valve plug 140 slidably disposed within the bore 124 and attached to a stem 142.

Each fluid flow zone 130 includes a plurality of spaced-apart through openings 136 extending between the outer surface 132 and the inner surface 134. Preferably, the through openings 136 in each fluid flow zone 130 are spaced-apart from and parallel to one another. The through openings 136 may be disposed in any type of pattern in the cylindrical wall 122. Each through opening 136 is generally annular in shape, but may have other shapes such as, for example, rectangular, oblong, oval, parallel-piped, diamond-shaped, etc. As depicted in FIG. 3, a reference plane X extends orthogonally relative to the axis Y. Each through opening 136 defines an opening axis R extending through the wall 122. The opening axis R is disposed at a non-orthogonal angle such as, for example, a non-orthogonal angle D illustrated in FIG. 3, relative to the reference plane X. In FIG. 3, the illustrated non-orthogonal angle D is 45°. However, other angles greater than 0° may be utilized for positioning the through openings 136 in the wall 122. The direction of fluid flow between the inlet port 112 and the outlet port 114 determines the desired angle of the opening axis R relative to the reference plane X.

The extent that the non-orthogonal angle D varies from the reference plane X may determine how many through openings 136 can be located in the valve cage 116. Thus, the non-orthogonal angle D is preferably, but not necessarily, in the range of 5-85°. The non-orthogonal angle D also determines the quantity of fluid that may flow through each through opening 136. By disposing the opening axis R of the through opening 136 at the non-orthogonal angle D relative to the reference plane X , the opening axis R is oriented along the direction of fluid flow from the inlet port 112 to the outlet port 114. Such an orientation produces a more efficient and/or less turbulent fluid flow through the through openings 136, as compared to the fluid flow through slots having a longitudinal axis either in or parallel to a reference plane orthogonal to the bore axis (e.g., see FIG. 2 where each opening 29 has a longitudinal axis S that is either in or parallel to the reference plane B). The more efficient and/or less turbulent fluid flow through the through openings 136 results in an increase in fluid flow capacity of the example valve assembly 100 without requiring an increase the overall size and cost of the example valve assembly 100.

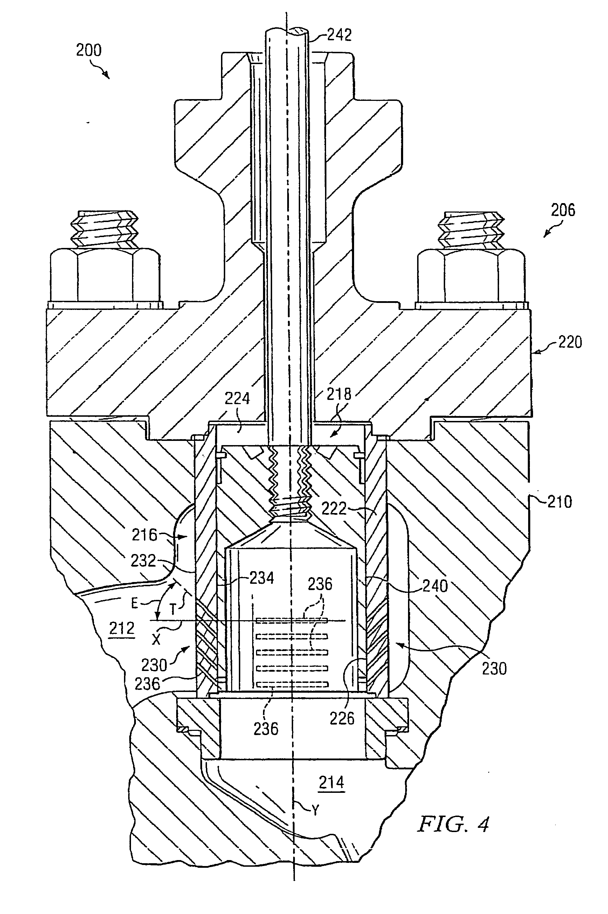

FIG. 4 is a partially cut-away schematic illustration of an example control valve assembly 200. The example control valve assembly 200 includes a valve body 206 having an inlet port 212 and an outlet port 214, a valve cage 216, a valve plug assembly 218 and a bonnet assembly 220. The valve cage 216 is a sleeve-like structure having a cylindrical wall 222 defining a bore 224 located along an axis Y. The valve cage 216 defines a valve seat 226 having one or more fluid flow zones 230, which enable fluid flow between an outer surface 232 and an inner surface 234 of the cylindrical wall 222. The valve plug assembly 218 includes a generally cylindrical-shaped valve plug 240 slidably disposed within the bore 224 and attached to a stem 242.

Each fluid flow zone 230 includes a plurality of spaced-apart through openings 236 extending between the outer surface 232 and the inner surface 234. Preferably, the through openings 236 in each fluid flow zone 230 are spaced-apart from and parallel to one another. The through openings 236 may be disposed in any type of pattern in the cylindrical wall 222. Each through opening 236 is generally rectangular in shape, but may have other slot-like shapes such as, for example, oblong, oval, parallel-piped, diamond-shaped, etc. As depicted in FIG. 4, a reference plane X extends orthogonally relative to the axis Y. Each through opening 236 defines an opening axis T extending through the wall 222. The opening axis T is disposed at a non-orthogonal angle such as, for example, a non-orthogonal angle E illustrated in FIG. 4, relative to the reference plane X. In FIG. 4, the illustrated non-orthogonal angle E is 45°. However, other angles greater than 0° may be utilized for positioning the through openings 236 in the wall 222. The direction of fluid flow between the inlet port 212 and the outlet port 214 detennines the desired angle of the opening axis T relative to the reference plane X.

The extent that the non-orthogonal angle E varies from the reference plane X may determine how many through openings 236 can be located in the valve cage 216. Thus, the non-orthogonal angle E is preferably, but not necessarily, in the range of 5-85°. The non-orthogonal angle E also determines the quantity of fluid that may flow through each through opening 236. By disposing the opening axis T of the through opening 236 at the non-orthogonal angle E relative to the reference plane X , the opening axis T is oriented along the direction of fluid flow from the inlet port 212 to the outlet port 214. As previously described herein, such an orientation produces a more efficient and/or less turbulent fluid flow through the through openings 236, as compared to the fluid flow through slots having a longitudinal axis either in or parallel to a reference plane orthogonal to the bore axis (e.g., see FIG. 2 where each opening 29 has a longitudinal axis S that is either in or parallel to the reference plane B). The more efficient and/or less turbulent fluid flow through the through openings 236 results in an increase in fluid flow capacity of the example valve assembly 200 without requiring an increase the overall size and cost of the example valve assembly 200.

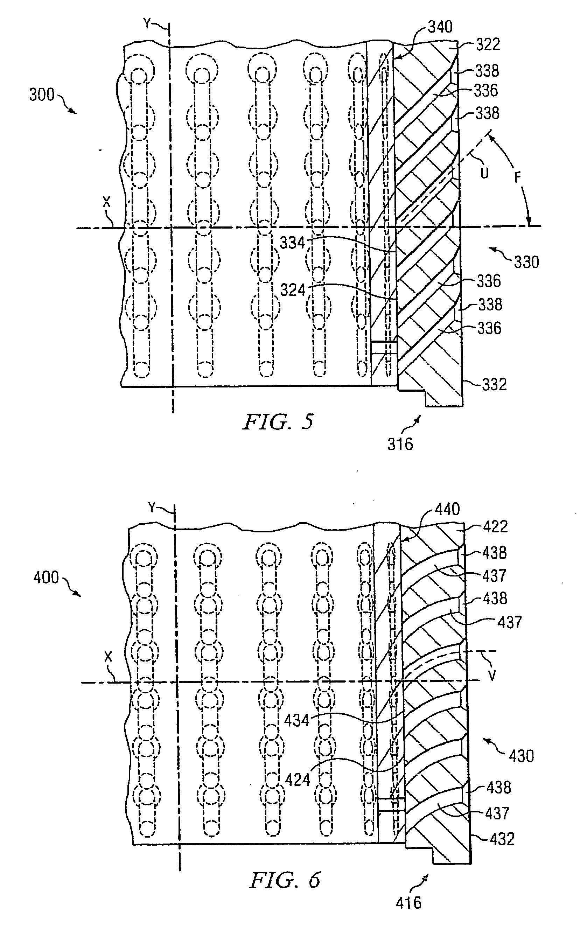

FIG. 5 is an enlarged illustration of a portion of another example valve assembly 300. A generally cylindrical-shaped valve plug 340 is slidably disposed within a bore 324 (about the axis Y) of a valve cage 316. The valve cage 316 includes a cylindrical wall 322 having an outer surface 332 and an inner surface 334. A flow zone 330 includes through openings 336 that extend between the outer surface 332 and the inner surface 334 to enable fluid flow through the openings 336 as the valve plug 340 is moved relative to the valve cage 316. The through openings 336 in the fluid flow zone 330 are spaced-apart from and parallel to one another. However, the through openings 336 may be disposed in any type of pattern in the cylindrical wall 322.

Each through opening 336 is generally annular in shape, but may have other shapes such as, for example, rectangular, oblong, oval, parallel-piped, diamond-shaped, etc. As depicted in FIG. 5, the reference plane X extends orthogonally relative to the axis Y. Each through opening 336 defines an opening axis U extending through the wall 322. The opening axis U is disposed at a non-orthogonal angle such as, for example, a non-orthogonal angle F illustrated in FIG. 5, relative to the reference plane X. In FIG. 5, the illustrated non-orthogonal angle F is 45°. However, other angles greater than 0° may be utilized for positioning the through openings 336 in the wall 322. Similar to the range disclosed for the non-orthogonal angle E in FIG. 4, the non-orthogonal angle F in FIG. 5 is preferably, but not necessarily, in the range of 5-85°

The through openings 336 each include an enlarged or chamfered area 338 at the outer surface 332. In some circumstances, a sharp corner or edge at the interface of a through opening 336 with the outer surface 332 may result in turbulence in the fluid flow and a corresponding decrease in fluid flow capacity. The presence of the enlarged or chamfered areas 338 al the interfaces of the through openings 336 with the outer surface 332 minimizes the possibility of turbulent fluid flow and provides a relatively smooth fluid flow through the through openings 336. The smooth fluid flow through the through openings 336 results in an increase in fluid flow capacity of the example valve assembly 300 without requiring an increase the overall size and cost of the valve example valve assembly 300.

FIG. 6 is an enlarged illustration of a portion of an example valve assembly 400 according to the invention. A generally cylindrical-shaped valve plug 440 is slidably disposed within a bore 424 (about the axis Y) of a valve cage 416. The valve cage 416 includes a cylindrical wall 422 having an outer surface 432 and an inner surface 434. A flow zone 430 includes curved through openings 437 that extend between the outer surface 432 and the inner surface 434 to enable fluid flow through the curved through openings 437 as the valve plug 440 is displaced relative to the to the valve cage 416. The curved through openings 437 in the fluid flow zone 430 are spaced-apart from and parallel to one another. However, the curved through openings 437 may be disposed in any type of pattern in the cylindrical wall 422.

Each curved through opening 437 is generally annular in shape, but may have other shapes such as, for example, rectangular, oblong, oval, circular, parallel-piped, diamond-shaped, etc. As depicted in FIG. 6, the reference plane X extends orthogonally relative to the axis Y. Each curved through opening 437 defines an opening axis V extending through the wall 422. The opening axis V is curved or nonplanar relative to the reference plane X. The curved through openings 437 each provide a smooth transition for fluid flow between the outer surface 432 and the inner surface 434 and, by directing the fluid flow through a curved through opening 437, the valve cage 416 may provide an enhanced fluid flow capacity.

The curved through openings 437 also each include an enlarged or chamfered area 438 at the outer surface 432. As similarly described in connection with FIG. 5, the presence of the enlarged or chamfered areas 438 at the interfaces of the curved through openings 437 with the outer surface 432 minimizes the possibility of turbulent fluid flow and provides a relatively smooth (i.e., relatively low turbulence) fluid flow through the-curved through openings 437. The smooth fluid flow through the curved through openings 437 results in an increase in fluid flow capacity of the example valve assembly 400 without requiring an increase the overall size and cost of the valve example valve assembly 400.

Although certain example apparatus have been described herein, the scope of coverage of this patent is not limited thereto. On the contrary, this patent covers all apparatus falling within the scope of the appended claims.

## Claims

1. Apparatus (400) to increase fluid flow in a valve, comprising:
a valve body (106) having a fluid passageway;
a valve cage (416) located in said passageway and comprising a wall (422) having an inner surface and an outer surface (432), the inner surface (434) defining a cage bore (424) having an axis (Y), the wall having at least one flow zone (430) comprising a plurality of through openings (437), each through opening spaced-apart from an adjacent through opening and each through opening extending between the inner and outer surfaces to define an opening axis (V) extending through the wall (422), and
a valve plug (140) axially slidable in the cage bore (424),
**characterized in that**
each opening axis (V) is curved and not parallel relative to a reference plane (X) disposed orthogonal to the axis (Y) of the cage bore.

2. Apparatus as defined in claim 1, wherein at least one of the through openings has an enlarged area at the outer surface of the valve cage.

3. Apparatus as defined in claim 1, wherein at least one of the through openings has a chamfer at the outer surface of the valve cage.

4. Apparatus as defined in any of claims 1 to 3, wherein the through openings are arranged in a pattern.

5. Apparatus as defined in any of claims 1 to 4 wherein each through opening is a circular-shaped passageway.

6. Apparatus as defined in any of claims 1 to wherein each through opening is an oblong-shaped passageway.

## Patentansprüche

1. Vorrichtung (400) zum Erhöhen eines Fluidurchflusses in einem Ventil, Folgendes aufweisend:
einen Ventilkörper (106) mit einem Fluiddurchgang;
einen Ventilkäfig (416), der in dem Durchgang angeordnet ist und eine Wand (422) mit einer Innenfläche und einer Außenfläche (432) umfasst, wobei die Innenfläche (434) eine Käfigbohrung (424) mit einer Achse (Y) definiert, wobei die Wand mindestens eine Strömungszone (430) hat, die mehrere Durchgangsöffnungen (437) umfasst, wobei jede Durchgangsöffnung von einer benachbarten Durchgangsöffnung beabstandet ist und sich jede Durchgangsöffnung zwischen der Innen- und Außenfläche erstreckt, um eine Öffnungsachse (V) zu definieren, die sich durch die Wand (422) erstreckt, und
einen axial in der Käfigbohrung (424) gleitfähigen Ventilstopfen (140),
**dadurch gekennzeichnet, dass**
jede Öffnungsachse (V) gekrümmt und in Bezug auf eine orthogonal zur Achse (Y) der Käfigbohrung angeordnete Referenzebene (X) nicht parallel ist.

2. Vorrichtung nach Anspruch 1, wobei mindestens eine der Durchgangsbohrungen eine vergrößerte Fläche an der Außenfläche des Ventilkäfigs hat.

3. Vorrichtung nach Anspruch 1, wobei mindestens eine der Durchgangsbohrungen eine Abschrägung an der Außenfläche des Ventilkäfigs hat.

4. Vorrichtung nach einem der Ansprüche 1 bis 3, wobei die Durchgangsöffnungen in einem Muster angeordnet sind.

5. Vorrichtung nach einem der Ansprüche 1 bis 4, wobei es sich bei jeder Durchgangsöffnung um einen kreisförmigen Durchgang handelt.

6. Vorrichtung nach einem der Ansprüche 1 bis 4, wobei es sich bei jeder Durchgangsöffnung um einen länglich geformten Durchgang handelt.

## Revendications

1. Appareil (400) pour augmenter un écoulement de fluide dans une soupape, comprenant :
un corps de soupape (106) ayant un passage pour fluide ;
une cage de soupape (416) située dans le passage et comprenant une paroi (422) ayant une surface intérieure et une surface extérieure (432), la surface intérieure (434) définissant un alésage de cage (424) ayant un axe (Y), la paroi ayant au moins une zone d'écoulement (430) comprenant plusieurs ouvertures traversantes (437), chaque ouverture traversante étant espacée d'une ouverture traversante adjacente et chaque ouverture traversante s'étendant entre les surfaces intérieure et extérieure pour définir un axe d'ouverture (V) s'étendant à travers la paroi (422), et
un obturateur de soupape (140) pouvant coulisser axialement dans l'alésage de cage (424),
**caractérisé en ce que**
chaque axe d'ouverture (V) est incurvé et non pas parallèle par rapport à un plan de référence (X) disposé orthogonalement par rapport à l'axe (Y) de l'alésage de cage.

2. Appareil selon la revendication 1, dans lequel au moins une des ouvertures traversantes a une surface agrandie au niveau de la surface extérieure de la cage de soupape.

3. Appareil selon la revendication 1, dans lequel au moins une des ouvertures traversantes a un chanfrein au niveau de la surface extérieure de la cage de soupape.

4. Appareil selon l'une quelconque des revendications 1 à 3, dans lequel les ouvertures traversantes sont agencées selon un motif.

5. Appareil selon l'une quelconque des revendications 1 à 4, dans lequel chaque ouverture traversante est un passage de forme circulaire.

6. Appareil selon l'une quelconque des revendications 1 à 4, dans lequel chaque ouverture traversante est un passage de forme oblongue.
